# EUROPEAN PATENT APPLICATION

(11) **EP 4 179 883 A1**
(43) Date of publication of application: **17.05.2023**
(21) Application number: 21836937.9
(22) Date of filing: 15.04.2021
(51) Int. Cl.: A24D 1/22, A24F 47/00

(54) **CARBON-HEATED CIGARETTE**

(30) Priority: 07.07.2020 CN 202010646455
(71) Applicant: Zhengzhou Tobacco Research Institute of CNTC, Zhengzhou, Henan 450001 (CN); China Tobacco Yunnan Industrial Co., Ltd, Kunming City, Yunnan 650233 (CN)
(72) Inventor: ZHANG, Ke, Zhengzhou City, Henan 450001 (CN); LEI, Ping, Zhengzhou City, Henan 450001 (CN); LI, Bin, Zhengzhou City, Henan 450001 (CN); HAN, Jingmei, Zhengzhou City, Henan 450001 (CN); WANG, Shuang, Zhengzhou City, Henan 450001 (CN); GONG, Weimin, Zhengzhou City, Henan 450001 (CN); HUANG, Feng, Zhengzhou City, Henan 450001 (CN); LI, Zhiqiang, Zhengzhou City, Henan 450001 (CN); WANG, Le, Zhengzhou City, Henan 450001 (CN); WANG, Ru, Zhengzhou City, Henan 450001 (CN); ZHANG, Mingjian, Zhengzhou City, Henan 450001 (CN); WANG, Bing, Zhengzhou City, Henan 450001 (CN)
(74) Representative: Schiweck Weinzierl Koch Patentanwälte Partnerschaft mbB
(86) International application number: PCT/CN2021/087495
(87) International publication number: WO 2022/007459

(57) **Abstract**

The invention provides a carbon-heated cigarette which comprises a carbon rod section, a tobacco section, a smoke extraction section and a filter section which are sequentially arranged from an upstream to a downstream. The carbon-heated cigarette can also comprise a composite paper and an outer wrapper wrapped around the outsides of the composite paper, the tobacco section, the smoke extraction section and the filter section. The composite paper is wrapped around a part of the carbon rod section and a part of or the entire tobacco section. The smoke extraction section has a cavity passing therethrough in an axial direction, and has a side wall having at least one side wall through-hole that communicates with the cavity. A wrapper through-hole is formed on the outer wrapper at a position corresponding to the side wall through-hole so as to allow the external air enter the smoke extraction section. The carbon-heated cigarette according to the present invention prevents air from passing through the tobacco section of the carbon-heated cigarette when the cigarette is being smoked, thereby the tobacco material can be maintained within a certain temperature range, and the composition and concentration of mainstream smoke are ensured.

## Description

### Field of the Invention

The invention relates to the field of cigarettes, in particular to a carbon-heated cigarette which heats tobacco through heat conduction and forms smoke through air flow extraction.

### Background of the Invention

Compared with other new tobacco products, the carbon-heated cigarette is closest to the traditional cigarette in the aspects of product appearance, smoking method, sensory experience and the like, and has unique value and significance. In the prior art, the hot air flow generated by the combustion of a heat source is utilized to heat tobacco materials, the nicotine, flavor substances and the like in the tobacco materials are "baked", and the mainstream smoke is formed after condensation. The temperature of hot air flow generated in the smoking process of the currently known carbon-heated cigarette can reach 400-600 °C and the concentration of the residual oxygen in the air flow is 8-13%. Under such condition, the tobacco materials can still undergo oxidative exothermic reaction, so that the local temperature of the tobacco materials can reach 700-900 °C , which has a potential risks. At meanwhile, the content of harmful substances in the mainstream smoke is higher than that of electrically heated cigarette products, and the consumer's smoking comfort is poor.

Patent documents such as Chinese patent CN103564657, Chinese patent application CN107148224 and Chinese patent CN105324047 all disclose that the heat source is isolated from a smoking substrate or tobacco material, and the heat generated by the combustion of the heat source is transferred to the smoking substrate or tobacco materials through a heat conducting element. However, since the heat transfer efficiency of the ends and the heat-conducting element is far lower than that of forced convection heat transfer, the temperature of the smoking substrate or tobacco material is significantly reduced, and the temperature has a significant impact on the smoke composition and the sensory quality. In addition, when the fresh air enters the cigarette during smoking, the temperature of the smoking substrate or tobacco material will be further reduced, which affects the smoke volume and stability of the mainstream smoke.

### SUMMARY OF THE INVENTION

In order to solve the above problems, the present invention provides a carbon-heated cigarette in which the air does not pass through the tobacco section when the cigarette is smoked, so that tobacco materials can be kept within a certain temperature range, and the composition and concentration of the mainstream smoke are guaranteed.

The carbon-heated cigarette according to the present invention comprises a carbon rod section, a tobacco section, a smoke extraction section and a filter section which are arranged coaxially and adjacent to each other successively from the upstream to the downstream of the carbon-heated cigarette. The carbon-heated cigarette may further comprise a composite paper wrapping a part of the carbon rod section adjacent to the tobacco section, and a part of the tobacco section adjacent to the carbon rod section or the entire tobacco section. The smoke extraction section is provided with a cavity passing through the smoke extraction section in the axial direction of the carbon-heated cigarette, and the side wall of the smoke extraction section is provided with at least one side wall through-hole communicating with the cavity. The carbon-heated cigarette may also include an outer wrapper wrapped on the outside of the composite paper, the tobacco section, the smoke extraction section and the filter section, and the outer wrapper being formed with a wrapper through-hole at a position corresponding to at least one side wall through-hole to allow outside air to enter the smoke extraction section.

According to the first exemplary embodiment of the present invention, a thermally conductive barrier may be arranged between the carbon rod section and the tobacco section to separate the carbon rod section from the tobacco section, and the composite paper is a metal composite foil paper.

Alternatively, a thermally conductive barrier may be secured to the downstream end face of the carbon rod section.

Preferably, the thermally conductive barrier may be made of an air-impermeable thermally conductive material.

According to the second exemplary embodiment of the present invention, the composite paper may be a graphite composite paper, and the graphite composite paper includes an inner graphite paper layer and an outer cigarette paper layer, the width of the inner graphite paper layer is smaller than that of the outer cigarette paper layer.

Alternatively, the graphite composite paper may have a thickness in the range of 30 µm to 80 µm.

Preferably, the thermal conductivity of the inner graphite paper layer in the direction of the paper surface may be greater than 400W/ m·K , and the thermal conductivity of the inner graphite paper layer in the thickness direction may be less than 10W/ m·K.

Further, the outer wrapper may comprise an outer cigarette paper and a receiving paper, the outer cigarette paper is wrapped around the outside of the composite paper, the tobacco section and the smoke extraction section, and the receiving paper is wrapped around the filter section and a part of the outer cigarette paper that is outside the smoke extraction section.

According to one example, the cross-section of the cavity of the smoke extraction section may have a regular or irregular shape.

According to another example, the cavity may be a cavity made up of a plurality of sections having different diameters.

According to yet another example, the cavity may be formed by a plurality of channels distributed evenly and penetrating along the axial direction of the carbon-heated cigarette.

Preferably, the diameter of the wrapper through-hole is not smaller than that of the side wall through-hole.

Alternatively, the outer wrapper may be made of a paper-based material or a foil-based material which is air-impermeable or has a controlled air-permeability.

Preferably, the smoke extraction section may be made of acetate, corrugated paper or a paper-based material.

According to the carbon-heated cigarette of the present invention, since the smoke extraction section is provided with a cavity communicating with the outside through the side wall through-hole, the air can enter the cigarette through the side wall through-hole of the smoke extraction section during smoking, instead of passing through the tobacco section. Fresh air enters from the side wall through-hole, which has a good cooling effect on mainstream smoke, so that tobacco materials are kept within a certain temperature range, thereby ensuring the composition and concentration of the mainstream smoke and improving the effective utilization rate of raw materials. Also, the way of using the smoke extraction section to indirectly carry the smoke gas can effectively prevent the cold air from passing through the tobacco section during smoking (suction process), the heating efficiency is improved, the oxygen content of the tobacco section is effectively reduced, and the purpose of heating without burning is achieved. In addition, by adjusting the number of side wall through-holes, the hole diameter, the direction of the hole and the distance from the tobacco section, the extraction efficiency of the smoke, the dilution efficiency of the smoke and the temperature of the mainstream smoke can be easily adjusted, thereby improving the sensory quality of the cigarette. In addition, because combustion smoke of the heat source is basically separated from the mainstream smoke, the application range of the heat source formula can be expanded. The carbon-heated cigarette according to the present invention has a simple structure, and thus is easy to be produced industrially.

### BRIEF DESCRIPTION OF THE DRAWINGS

The above and other aspects and features of the present invention will become apparent from the following description of the embodiments with reference to the accompanying drawings, in which:
FIG. 1 is a schematic structural view of a carbon-heated cigarette according to a first exemplary embodiment of the present invention;
FIG. 2 is a schematic structural view of a carbon-heated cigarette according to a second exemplary embodiment of the present invention;
Fig. 3 is an expanded top view and a right side view showing the structure of graphite composite paper of the carbon-heated cigarette according to the second exemplary embodiment;
Figs. 4A-4C are schematic structural views of a smoke extraction section according to an example;
Figs. 5A-5C are schematic views of a smoke extraction section according to another example; and
Fig. 6A and 6B are schematic structural views of a smoke extraction section according to yet another example.

### DETAILED DESCRIPTION OF THE EMBODIMENTS

The illustrative, non-limiting embodiments of the present invention will be described in detail below with reference to the accompanying drawings, and the carbon-heated cigarette according to the present invention will be further described.

The carbon-heated cigarette according to the present invention comprises a carbon rod section, a tobacco section, a smoke extraction section and a filter section which are coaxially and adjacently arranged from the upstream to the downstream of the carbon-heated cigarette in sequence. The carbon-heated cigarette may further comprise a composite paper wrapping a part of the carbon rod section adjacent to the tobacco section, and a part of the tobacco section adjacent to the carbon rod section or the entire tobacco section. The smoke extraction section is provided with a cavity passing through the smoke extraction section in an axial direction of the carbon-heated cigarette, and the side wall of the smoke extraction section is provided with at least one side wall through-hole communicating with the cavity. Alternatively, the smoke extraction section may be made of acetate, corrugated paper or a paper-based material. The carbon-heated cigarette may further include an outer wrapper wrapped on the outside of the composite paper, the tobacco section, the smoke extraction section and the filter section, and the outer wrapper is formed with a wrapper through-hole at a position corresponding to at least one side wall through-hole so as to allow outside air to enter the smoke extraction section. For example, the diameter of the wrapper through-hole is not smaller than that of the side wall through-hole.

According to the present invention, the use method of the carbon-heated cigarette is similar to that of the conventional cigarette by igniting the carbon rod section for direct smoking. When smoking the carbon-heated cigarette, the heat generated by the burning of the carbon rod section is transferred to the tobacco section via the composite paper. The smoke generated by the tobacco section is mixed with the air entering from the smoke extraction section through active diffusion to form mainstream smoke, and the mainstream smoke enters the consumer's mouth after passing through the filter section. Because the smoke extraction section is provided with a cavity communicating with the outside through the side wall through-hole, air can enter the cigarette through the side wall through-hole of the smoke extraction section during smoking, instead of passing through the tobacco section, and the fresh air will flow from the side wall through-hole which causes a good cooling effect on the mainstream smoke, so that tobacco materials are kept within a certain temperature range, the composition and concentration of the mainstream smoke are ensured, and the effective utilization rate of raw materials is improved. In addition, since the combustion smoke of the heat source is basically separated from the mainstream smoke, the application range of the heat source formula can be expanded.

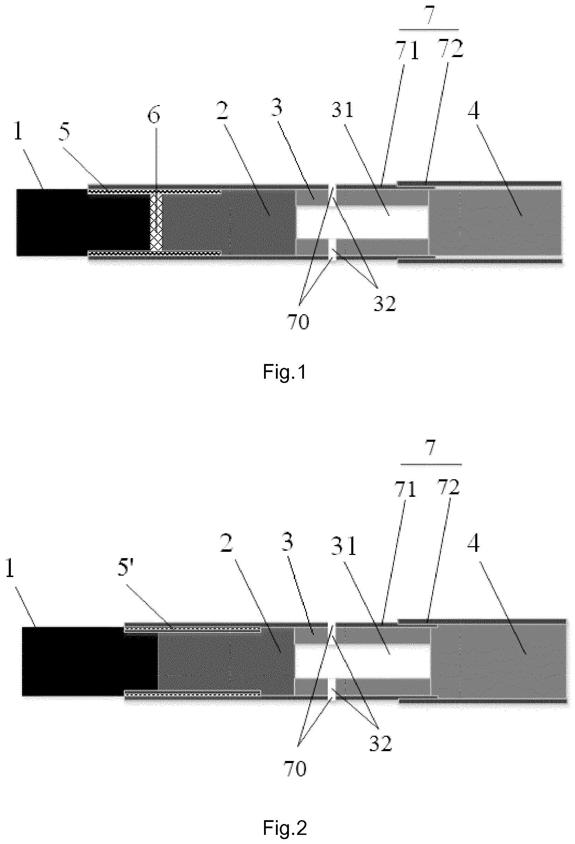

Next, a carbon-heated cigarette according to a first exemplary embodiment of the present invention will be described in detail with reference to Fig. 1.

According to the first exemplary embodiment of the present invention, a carbon-heated cigarette comprises a carbon rod section 1, a tobacco section 2, a smoke extraction section 3 and a filter section 4 arranged coaxially and adjacently in sequence from the upstream to the downstream of the carbon-heated cigarette, as shown in Fig. 1. For example, the tobacco section 2 may be made up of various forms of tobacco raw materials wrapped in paper bases or composed of other smoking substrates. The tobacco raw materials are tobacco substances composed of a certain formula, which can be in the form of sheets, filaments, granules, shaped rods, porous stick form, gel form, etc. composed of a paper-based wrapped tobacco material in various forms. The carbon-heated cigarette may also comprise metal composite foil paper 5, which wraps a part of the carbon rod section 1 close to the tobacco section 2 and a part of the tobacco section 2 adjacent to the carbon rod section 1. According to this embodiment, a thermally conductive barrier 6 is provided between the carbon rod section 1 and the tobacco section 2 to separate the carbon rod section from the tobacco section. According to one example, the thermally conductive barrier 6 may be secured to the downstream end face of the carbon rod section 1, for example by bonding, pressing or otherwise. The thermally conductive barrier 6 may be made of an air-impermeable thermally conductive material including organic or inorganic materials. Preferably, the thermally conductive barrier 6 may be made of highly thermally conductive inorganic materials, such as graphite, metal, metal oxide, and the like.

Further, the smoke extraction section 3 has a cavity 31 passing through the smoke extraction section in an axial direction of the carbon-heated cigarette, and the side wall of the smoke extraction section 3 is formed with at least one side wall through-hole 32 communicating with the cavity 31. For example, two side wall through-holes 32 are exemplarily shown in Fig. 1. The carbon-heated cigarette may further comprise an outer wrapper 7 wrapped around the outside of the metal composite foil paper 5, the tobacco section 2, the smoke extraction section 3 and the filter section 4, and the outer wrapper is formed with a wrapper through-hole 70 at a position corresponding to at least one sidewall through-hole 32 to allow outside air to enter the smoke extraction section 3.

According to the first exemplary embodiment, when the carbon-heated cigarette is smoked, the heat generated by combustion of the carbon rod section 1 is transferred to the tobacco section 2 via the metal composite foil paper 5 and the thermally conductive barrier 6. The smoke generated by the tobacco section 2 mixes with the air entering the cavity 31 of the smoke extraction section 3 through the side wall through-hole 32 via active diffusion to form mainstream smoke, and enters the consumer's mouth after passing through the filter section 4.

According to an alternative embodiment, the outer wrapper 7 may further comprise an outer cigarette paper 71 and a receiving paper 72. The outer cigarette paper 71 is wrapped around the outside of the composite paper, tobacco section and smoke extraction section, and the receiving paper 72 is wrapped around the outside of the filter section and a part of the cigarette paper 71 located outside the smoke extraction section. Alternatively, the outer wrapper may be made of a paper-based material, foil-based material or other film-based material which is air-impermeable or has a controlled air permeability.

Fig. 2 schematically shows a carbon-heated cigarette according to a second exemplary embodiment of the present invention, wherein the same components as those of the carbon-heated cigarette according to the first exemplary embodiment are denoted by the same reference numerals and will not be described in detail herein.

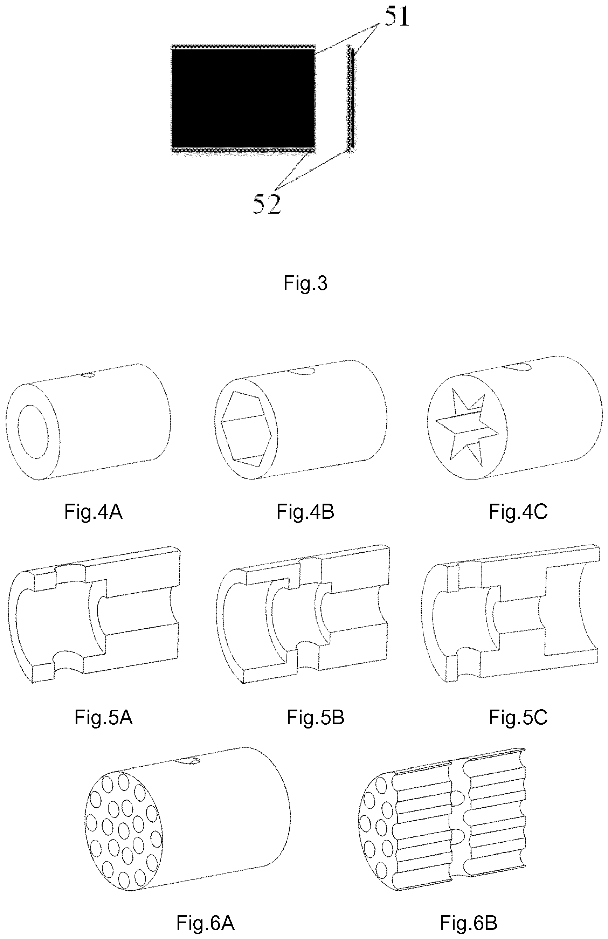

According to a second exemplary embodiment, a carbon-heated cigarette comprises includes a carbon rod section 1, a tobacco section 2, a smoke extraction section 3 and a filter section 4 which are arranged coaxially and adjacently in sequence from the upstream to the downstream of the carbon-heated cigarette. In this embodiment, the carbon rod section 1 is directly adjacent to the tobacco section 2. The carbon-heated cigarette also includes graphite composite paper 5', which wraps a part of the carbon rod section 1 close to the tobacco section 2 and a part of the tobacco section 2 adjacent to the carbon rod section 1. Referring to Fig. 3, the graphite composite paper 5' may further include an inner graphite paper layer 51 and an outer cigarette paper layer 52, and the width of the inner graphite paper layer after unfolding is smaller than that of the outer cigarette paper layer so as to obtain a good adhesive lap. The inner graphite paper layer is a thermal management material formed by chemically treating high-carbon flake graphite and high-temperature expansion and rolling. Compared with the isotropic foil-based materials commonly used in the prior art, it can transfer heat to tobacco materials more effectively. In the second exemplary embodiment, the carbon rod section is directly adjacent to the tobacco section without a barrier, and due to the existence of the smoke extraction section, the suction resistance of the carbon rod section and the tobacco section is too large, and the graphite paper is incombustible and air-impermeable, so fresh air will not enter the cigarette from the carbon rod section tightly wrapped by the graphite composite paper during suction, and this part of the heat source will not burn, thus, compared with cigarette products provided with barriers, the structure of the cigarette and the processing technology are simplified.

Preferably, the graphite composite paper may have a thickness in the range of 30 µm to 80 µm. Alternatively, the thermal conductivity of the inner graphite paper layer in the paper surface direction may be greater than 400W/m • K, and the thermal conductivity thereof in the thickness direction may be less than 10W/m • K.

The structure of the smoke extraction section according to an embodiment of the present invention will be exemplarily described below with reference to Figs. 4 to 6. According to one example, the cross-section of the cavity of the smoke extraction section may have a regular or an irregular shape. For example, Figs. 4A-4C show that the cross-section of the cavity of the extraction section has regular shapes, such as circular, hexagonal and triangular, for illustrative purposes only. According to another example, the cavity of the smoke extraction section may be a cavity made up of a plurality of sections having different diameters, thereby forming a ring-like through-hole hollow chamber, as shown in Fig. 5A-5C. According to yet another example, as shown in Fig. 6A and 6B, the cavity of the smoke extraction section may be composed of a plurality of channels uniformly distributed along the axial direction of the carbon-heated cigarette, and the number and the diameter of the channels may be adjustable as required.

Although exemplary embodiments of the present invention have been described, it will be appreciated by those skilled in the art that changes may be made in these embodiments without departing from the principles and spirit of the invention, the scope of which is defined in the claims and their equivalents.

## Claims

1. A carbon-heated cigarette comprises a carbon rod section, a tobacco section, a smoke extraction section and a filter section which are arranged coaxially and adjacent to each other successively from the upstream to the downstream of the carbon-heated cigarette, wherein
said carbon-heated cigarette further comprises a composite paper wrapping a part of said carbon rod section adjacent to said tobacco section, and a part of said tobacco section adjacent to said carbon rod section or the entire tobacco section;
said smoke extraction section is provided with a cavity passing through said smoke extraction section in an axial direction of the carbon-heated cigarette, and a side wall of the smoke extraction section is provided with at least one side wall through-hole communicating with the cavity; and
said carbon-heated cigarette also includes an outer wrapper wrapped on the outside of the composite paper, the tobacco section, the smoke extraction section and the filter section, and said outer wrapper being formed with a wrapper through-hole at a position corresponding to at least one side wall through-hole to allow outside air to enter the smoke extraction section.

2. The carbon-heated cigarette according to claim 1, wherein
a thermally conductive barrier is arranged between the carbon rod section and the tobacco section to separate the carbon rod section from the tobacco section; and
said composite paper is a metal composite foil paper.

3. The carbon-heated cigarette according to claim 2, wherein said thermally conductive barrier is secured to a downstream end face of the carbon rod section.

4. The carbon-heated cigarette according to claims 2 or 3, wherein said thermally conductive barrier is made of an air-impermeable thermally conductive material.

5. The carbon-heated cigarette according to claim 1, wherein said composite paper is a graphite composite paper, and said graphite composite paper includes an inner graphite paper layer and an outer cigarette paper layer, the width of the inner graphite paper layer is smaller than that of the outer cigarette paper layer.

6. The carbon-heated cigarette according to claim 5, wherein said graphite composite paper has a thickness in the range of 30 µm to 80 µm.

7. The carbon-heated cigarette according to claim 5, wherein the thermal conductivity of the inner graphite paper layer in the direction of the paper surface is greater than 400W/ m·K, and the thermal conductivity of the inner graphite paper layer in the thickness direction is less than 10W/ m·K.

8. The carbon-heated cigarette according to claim 1, wherein said outer wrapper includes an outer cigarette paper and a receiving paper, said outer cigarette paper is wrapped around the outside of the composite paper, the tobacco section and the smoke extraction section, and said receiving paper is wrapped around the filter section and a part of the outer cigarette paper that is outside the smoke extraction section.

9. The carbon-heated cigarette according to claim 1, wherein the cross-section of the cavity of the smoke extraction section has a regular or irregular shape.

10. The carbon-heated cigarette according to claim 1, wherein said cavity is a cavity formed by a plurality of sections having different diameters.

11. The carbon-heated cigarette according to claim 1, wherein said cavity is formed by a plurality of channels distributed evenly and penetrating along the axial direction of the carbon-heated cigarette.

12. The carbon-heated cigarette according to claim 1, wherein the diameter of the wrapper through-hole is not smaller than that of the side wall through-hole.

13. The carbon-heated cigarette according to claim 1, wherein said outer wrapper is made of a paper-based material or a foil-based material which is air-impermeable or has a controlled air-permeability.

14. The carbon-heated cigarette according to claim 1, wherein said smoke extraction section is made of acetate, corrugated paper or a paper-based material.
